# DEMANDE DE BREVET EUROPEEN

(11) **EP 4 046 843 A1**
(43) Date de publication de la demande: **24.08.2022**
(21) Numéro de dépôt: 22156033.7
(22) Date de dépôt: 10.02.2022
(51) Int. Cl.: B60K 6/48, B60K 6/387, B60K 6/36, B60K 6/365, B60K 6/547, F16F 15/00, F16H 3/12, F16H 3/091, F16H 61/04

(54) **MODULE MOTORISÉ, SOUS-ENSEMBLE HYBRIDE D'ENTRAÎNEMENT D'UN VÉHICULE ET MÉTHODE D'ENGAGEMENT D'UN CRABOT**

(30) Priorité: 22.02.2021 FR 2101671
(71) Demandeur: VALEO EMBRAYAGES, 80009 Amiens (FR)
(72) Inventeur: VASSIEUX, Loic, 80009 AMIENS (FR); LHEUREUX, Dominique, 80009 AMIENS (FR)
(74) Mandataire: Valeo Powertrain Systems

(57) **Abrégé**

Un sous-ensemble hybride (10) d'entraînement d'un véhicule, comporte des roues dentées primaires (38, 40) des roues dentées secondaires (42, 44, 46) aptes être accouplées à un arbre secondaire (16), un arbre intermédiaire (26) auquel sont solidarisées en rotation des roues dentées intermédiaires (28, 30, 32, 34, 36), la ou les roues dentées primaires (38, 40) et les roues dentées secondaires (42, 44, 46) engrenant chacune de façon permanente avec une roue dentée correspondante parmi les roues dentées intermédiaires (28, 30, 32, 34, 36). Ce sous-ensemble hybride (10) est équipé d'un module motorisé (5) comportant une machine électrique réversible (56), une interface de liaison (164) à l'arbre intermédiaire (26), un réducteur de vitesse (62), un dispositif d'amortissement d'oscillations de torsion (70) et un mécanisme d'accouplement (58) apte à accoupler et à désaccoupler la machine électrique réversible (56) et de l'arbre intermédiaire (26).

## Description

### DOMAINE TECHNIQUE DE L'INVENTION

L'invention se rapporte à un sous-ensemble hybride d'entraînement destiné à être positionné entre un moteur, par exemple un moteur thermique, et un ensemble d'une ou plusieurs roues motrices d'un véhicule. Elle se rapporte en particulier, bien que de façon non exclusive, à un tel sous-ensemble destiné à équiper un poids lourd, c'est-à-dire un véhicule routier de plus de 3,5 tonnes, notamment un tracteur routier, ou un porteur. L'invention se rapporte également à un module motorisé apte à être intégré au sein du sous-ensemble hybride d'entrainement.

### ETAT DE LA TECHNIQUE ANTERIEURE

Dans le document WO2011/072986A1 est décrit un sous-ensemble hybride d'entraînement d'un véhicule, comportant un arbre primaire destiné à être entraîné par un moteur thermique du véhicule, un arbre secondaire destiné à entraîner un ensemble d'une ou plusieurs roues motrices du véhicule, et une boîte de transmission comportant une roue dentée primaire solidaire en rotation de l'arbre primaire ou aptes à être accouplées à l'arbre primaire, une pluralité de roues dentées secondaires solidaires en rotation de l'arbre secondaire ou aptes être accouplées à l'arbre secondaire, et deux arbres intermédiaires auxquels sont solidarisées en rotation des roues dentées intermédiaires, la roue dentée primaire et les roues dentées secondaires engrenant chacune avec une roue dentée correspondante parmi les roues dentées intermédiaires. Le sous-ensemble hybride d'entraînement comporte en outre une machine électrique réversible liée cinématiquement aux arbres intermédiaires via un étage amont de démultiplication et un mécanisme d'accouplement à crabot, ladite machine électrique étant apte à fonctionner en générateur de courant pour freiner les arbres intermédiaires ou en moteur d'entraînement des arbres intermédiaires. Une telle machine électrique permet d'envisager différents modes de fonctionnement, et notamment un fonctionnement transitoire de la machine électrique pour freiner ou accélérer les arbres intermédiaires et favoriser la synchronisation de la boîte de transmission dans les phases de changement de rapport de transmission, un fonctionnement moteur pour assister l'entraînement du moteur principal du véhicule hors des phases de changement de rapport et un fonctionnement de générateur électrique, pour l'alimentation électrique d'accessoires du véhicule ou d'une batterie, notamment dans des phases de freinage du véhicule. Dans ce sous-ensemble hybride d'entraînement, la machine électrique réversible est disposée en ligne par rapport au moteur thermique, c'est-à-dire que le rotor de la machine électrique est concentrique à la sortie de l'arbre intermédiaire.

Dans le document WO2011/072986A1, le rotor de la machine électrique est amené en connexion avec l'arbre intermédiaire lors de la fermeture d'un mécanisme à crabot. Une fois la connexion achevée, les acyclismes générés par le vilebrequin du moteur thermique présents dans la boite de transmission sont transmis dans la machine électrique réversible en passant par l'arbre intermédiaire. Ces acyclismes et vibrations peuvent perturber le flux magnétique au sein de la machine électrique réversible ou encore endommager les paliers de guidage du rotor.

Il est donc nécessaire de protéger la machine électrique réversible et éventuellement le réducteur de vitesse associé des acyclismes provenant de la boite de transmission.

### EXPOSE DE L'INVENTION

L'invention vise à remédier aux inconvénients de l'état de la technique et à proposer une meilleure intégration d'une machine électrique au sein d'un sous-ensemble hybride d'entrainement lorsqu'elle est accouplée à un arbre intermédiaire de boîte de transmission. Cette intégration visera également à améliorer le comportement vibratoire de ce sous-ensemble hybride.

Pour ce faire est proposé, selon un premier aspect de l'invention, un module motorisé pour entraîner et ralentir un arbre intermédiaire d'un sous-ensemble hybride comportant au moins une roue dentée primaire destinée à être entraînée par un moteur principal du véhicule, un arbre secondaire destiné à entraîner un ensemble d'une ou plusieurs roues motrices du véhicule, plusieurs roues dentées secondaires aptes être accouplées à l'arbre secondaire, et des roues dentées intermédiaires solidarisées en rotation à l'arbre intermédiaire, la ou les roues dentées primaires et les roues dentées secondaires engrenant chacune de façon permanente avec une roue dentée correspondante parmi les roues dentées intermédiaires, le module motorisé comportant au moins une machine électrique réversible apte à entraîner et ralentir l'arbre intermédiaire, une interface de liaison apte à être liée cinématiquement en rotation à l'arbre intermédiaire, un réducteur de vitesse disposé cinématiquement entre la machine électrique réversible et l'interface de liaison, dans lequel le module motorisé comprend un dispositif d'amortissement d'oscillations de torsion disposé cinématiquement entre le réducteur de vitesse et l'interface de liaison.

L'utilisation d'un dispositif d'amortissement d'oscillations de torsion permet de protéger la machine électrique réversible des acyclismes provenant du moteur thermique et notamment retransmis par l'arbre intermédiaire. Egalement, lorsque la machine électrique réversible est activée en mode d'entrainement, on évite la transmission de vibrations générées depuis la machine électrique réversible vers l'arbre intermédiaire. Ces vibrations peuvent être importantes lorsque la machine électrique est de forte puissance, par exemple au-delà de 100 kW.

L'intégration d'un module motorisé au sein d'un sous-ensemble hybride permet d'envisager un fonctionnement transitoire de la machine électrique pour freiner ou accélérer les arbres intermédiaires et favoriser la synchronisation de la boîte de transmission dans les phases de changement de rapport de transmission, un fonctionnement moteur pour assister l'entraînement du moteur principal du véhicule hors des phases de changement de rapport et un fonctionnement de générateur électrique, pour l'alimentation électrique d'accessoires du véhicule ou d'une batterie, notamment dans des phases de freinage du véhicule.

Avantageusement, le réducteur de vitesse peut comprendre un organe d'entrée de couple lié en rotation avec le rotor de la machine électrique réversible et un organe de sortie de couple lié en rotation avec le dispositif d'amortissement d'oscillations de torsion, ledit réducteur de vitesse étant du type réducteur à train épicycloïdal ou du type réducteur à arbres parallèles ou du type réducteur à courroie. De cette manière, le réducteur de vitesse permet d'adapter la vitesse de rotation de la machine électrique au besoin du sous-ensemble hybride.

De préférence, dans le sens de la transmission d'un couple d'entrainement allant de la machine électrique réversible vers l'arbre intermédiaire, le dispositif d'amortissement d'oscillations de torsion peut être disposé à la sortie du réducteur de vitesse, c'est-à-dire après la réduction de vitesse. En mode d'entrainement, on évite la transmission de vibrations générées depuis la machine électrique réversible vers l'arbre intermédiaire. En mode générateur électrique, on protège le réducteur de vitesse des acyclismes provenant du sous-ensemble hybride via l'arbre intermédiaire.

Avantageusement, l'axe de la machine électrique réversible peut être concentrique à l'axe de rotation du dispositif d'amortissement d'oscillations de torsion.

De préférence, le module motorisé peut comporter un mécanisme d'accouplement apte à accoupler le module motorisé à l'arbre intermédiaire, ledit mécanisme d'accouplement étant disposé cinématiquement entre le dispositif d'amortissement d'oscillations de torsion et l'interface de liaison. De cette manière, la machine électrique réversible peut être désaccouplée par simple actionnement du mécanisme d'accouplement lorsqu'elle n'est pas nécessaire au fonctionnement de la boîte de transmission. Avantage complémentaire, le découplage de la machine électrique réversible permet de soulager les paliers de guidage du rotor de la machine électrique, ce qui augmente leur durée de vie.

Avantageusement, le mécanisme d'accouplement peut être du type mécanisme à crabot ou du type un mécanisme à synchroniseur ou du type mécanisme d'embrayage à friction.

De préférence, le module motorisé peut comporter un carter de module pour le logement du réducteur de vitesse et du dispositif d'amortissement d'oscillations de torsion, la machine électrique réversible étant soit logée dans le carter, soit fixée au carter.

La machine électrique réversible peut notamment être une machine synchrone à aimants permanents, une machine asynchrone, une machine électrique à réluctance variable ou une machine électrique synchrone à réluctance variable, dite synchro-réluctance.

La machine électrique réversible peut avoir un axe de rotation parallèle à un axe de rotation de l'interface de liaison, de préférence distant de l'axe de rotation de l'interface de liaison.

L'interface de liaison peut être par exemple un tronçon d'arbre cannelé ou un manchon cannelé. Il peut également s'agir d'une platine circulaire avec des trous de passage de vis de fixation (l'arbre intermédiaire comprenant une face d'appui munie de perçage-taraudage), ou d'un arbre muni d'une clavette.

Selon un mode de réalisation de l'invention, le dispositif d'amortissement d'oscillations de torsion peut être du type amortisseur à ressorts hélicoïdaux.

De préférence, le dispositif d'amortissement d'oscillations de torsion du type amortisseur à ressorts hélicoïdaux peut comporter :
- un voile de transmission de couple ;
- deux éléments de guidage liés en rotation, coaxiaux suivant un axe de rotation X et disposés de part et d'autre dudit voile de transmission de couple ;
- des ressorts hélicoïdaux de compression en appui sur le voile de transmission de couple et les éléments de guidage ;
le voile de transmission de couple ou l'un des éléments de guidage étant lié en rotation avec la sortie du réducteur de vitesse.

De préférence, le voile de transmission de couple peut être lié en rotation avec le porte-disques d'entrée du mécanisme d'accouplement du type mécanisme d'embrayage à friction.

En variante, l'un des éléments de guidage peut être lié en rotation avec le porte-disques d'entrée du mécanisme d'accouplement du type mécanisme d'embrayage à friction.

Avantageusement, le dispositif d'amortissement d'oscillations de torsion du type amortisseur à ressorts hélicoïdaux peut comprendre un sous-ensemble d'hystérésis apte à générer un couple d'hystérésis pour amortir les oscillations de torsion comportant au moins une rondelle de frottement et au moins une rondelle élastique d'application de charge sur l'au moins une rondelle de frottement.

De préférence, le dispositif d'amortissement d'oscillations de torsion du type amortisseur à ressorts hélicoïdaux peut comprendre un sens d'actionnement angulaire direct correspondant à une activation de la machine électrique réversible en mode d'entrainement et un sens d'actionnement angulaire rétrograde correspondant à une activation de la machine électrique réversible en mode de ralentissement.

Selon une des possibilités de l'invention, le couple d'hystérésis du dispositif d'amortissement d'oscillations de torsion du type amortisseur à ressorts hélicoïdaux dans le sens d'actionnement angulaire direct peut être supérieur au couple d'hystérésis dans le sens d'actionnement angulaire rétrograde. De cette manière, lorsque la machine électrique réversible est en mode d'entrainement, celle-ci est connectée à l'arbre intermédiaire pour lui apporter un couple complémentaire qui subira les acyclismes du moteur thermique. Il est nécessaire de réduire ces acyclismes par un couple d'hystérésis important au sein du dispositif d'amortissement d'oscillations de torsion dans le sens d'actionnement angulaire direct. Comme le moteur thermique est en mode propulsion, il génère des acylismes importants.

Selon une autre des possibilités de l'invention, le couple d'hystérésis du dispositif d'amortissement d'oscillations de torsion du type amortisseur à ressorts hélicoïdaux dans le sens d'actionnement angulaire direct peut être égal au couple d'hystérésis dans le sens d'actionnement angulaire rétrograde.

Selon encore une autre des possibilités de l'invention, le couple d'hystérésis du dispositif d'amortissement d'oscillations de torsion du type amortisseur à ressorts hélicoïdaux dans le sens d'actionnement angulaire direct peut être inférieur au couple d'hystérésis dans le sens d'actionnement angulaire rétrograde. De cette manière, lorsque la machine électrique réversible est en mode ralentissement ou autrement appelé mode générateur électrique de courant, et que le moteur thermique est en mode propulsion, les acyclismes provenant du moteur thermique ont besoin d'être réduits par un couple d'hystérésis élevé au sein du dispositif d'amortissement d'oscillations de torsion dans le sens d'actionnement angulaire rétrograde. Comme le moteur thermique est en mode propulsion, il génère des acylismes importants.

Selon un autre mode de réalisation de l'invention, le dispositif d'amortissement d'oscillations de torsion peut être du type amortisseur à masses pendulaires.

De préférence, le dispositif d'amortissement d'oscillations de torsion du type amortisseur à masses pendulaires peut comporter un support mobile en rotation autour d'un axe X et au moins une masse pendulaire dont le déplacement par rapport au support est guidé par au moins un organe de roulement, ledit support étant lié en rotation avec l'organe de sortie de couple du réducteur de vitesse.

Avantageusement, le support peut être lié en rotation avec le porte-disques d'entrée du mécanisme d'accouplement du type mécanisme d'embrayage à friction.

Suivant un autre aspect de l'invention, celle-ci a trait à un sous-ensemble hybride d'entraînement d'un véhicule, comportant :
- Au moins une roue dentée primaire destinée à être entraînée par un moteur principal du véhicule,
- un arbre secondaire destiné à entraîner un ensemble d'une ou plusieurs roues motrices du véhicule,
- plusieurs roues dentées secondaires aptes être accouplées à l'arbre secondaire,
- un arbre intermédiaire auquel sont solidarisées en rotation des roues dentées intermédiaires, la ou les roues dentées primaires et les roues dentées secondaires engrenant chacune de façon permanente avec une roue dentée correspondante parmi les roues dentées intermédiaires,
- au moins un module motorisé reprenant tout ou partie des caractéristiques mentionnées précédemment, l'interface de liaison du module motorisé étant solidaire en rotation de l'arbre intermédiaire.

De préférence, le sous-ensemble hybride comporte un carter de transmission délimitant une cavité de logement des roues dentées primaires, des roues dentées secondaires et des roues dentées intermédiaires, la machine électrique réversible étant disposée à l'extérieur de la cavité de logement.

Avantageusement, la machine électrique réversible a un axe de rotation parallèle à un axe de rotation de l'arbre intermédiaire, une ou plusieurs des caractéristiques suivantes étant réalisées :
- l'axe de rotation de la machine électrique réversible est distant de l'axe de rotation de l'arbre intermédiaire ;
- l'axe de rotation de la machine électrique réversible est distant d'un axe de rotation des roues dentées primaires ;
- l'axe de rotation de la machine électrique réversible est distant d'un axe de rotation de l'arbre secondaire.

De préférence, le sous-ensemble hybride peut comporter un embrayage commandé par un actionneur d'embrayage et apte à désaccoupler l'au moins une roue dentée primaire par rapport au moteur principal du véhicule, ledit actionneur d'embrayage étant piloté par une unité de commande.

Avantageusement, au moins un crabot peut être positionné cinématiquement entre une des roues dentées secondaires et l'arbre secondaire et apte à accoupler l'arbre secondaire à la roue dentée secondaire associée, ledit crabot étant engagé lorsque les vitesses de rotation de la roue dentée secondaire et de l'arbre secondaire sont synchronisées par entrainement ou ralentissement de l'arbre intermédiaire grâce à l'activation de la machine électrique réversible. De cette manière, il est possible raccourcir les phases transitoires de changement de rapport de vitesse au sein du sous-ensemble hybride. Cette adaptation de la vitesse de l'arbre intermédiaire permet de réduire les temps de crabotage, sans avoir recours à un frein de boîte ou au double débrayage.

Suivant un autre aspect de l'invention, celle-ci a trait à une méthode d'engagement d'un crabot apte à accoupler un arbre secondaire à une roue dentée secondaire associée au sein d'un sous-ensemble hybride reprenant tout ou partie des caractéristiques mentionnées précédemment, comprenant les étapes suivantes :
- désaccouplement des roues dentées primaires par rapport au moteur principal du véhicule ;
- mise en position neutre du sous-ensemble hybride par désengagement du rapport de vitesse ;
- mesure de la vitesse de rotation relative entre l'arbre secondaire et la roue dentée secondaire associée ;
- entrainement ou ralentissement de l'arbre intermédiaire par activation de la machine électrique réversible pour synchroniser les vitesses de rotation de l'arbre secondaire avec la roue dentée secondaire associée ;
- engagement du crabot pour accoupler l'arbre secondaire à la roue dentée secondaire associée lorsque les vitesses de rotation de la roue dentée secondaire et de l'arbre secondaire sont synchronisées.

Selon cette méthode d'engagement de crabot, il est possible de raccourcir les phases transitoires de changement de rapport de vitesse au sein du sous-ensemble hybride. Cette adaptation de la vitesse de l'arbre intermédiaire permet de réduire les temps de crabotage, sans avoir recours à un frein de boîte ou au double débrayage. Ainsi lors d'un changement à un rapport de vitesse supérieur, il est possible de ralentir l'arbre intermédiaire du sous-ensemble hybride par activation de la machine électrique réversible. Egalement lors d'un changement à un rapport de vitesse inférieur, il est possible d'entrainer et accélérer l'arbre intermédiaire du sous-ensemble hybride par activation de la machine électrique réversible.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.

### BREVE DESCRIPTION DES FIGURES

D'autres caractéristiques et avantages de l'invention ressortiront à la lecture de la description qui suit, en référence aux figures annexées.
[Fig. 1] La figure 1 illustre un sous-ensemble hybride d'entraînement d'un véhicule comprenant deux modules motorisés suivant un premier mode de réalisation de l'invention.
[Fig. 2] La figure 2 est une vue isométrique d'un module motorisé pour entraîner et ralentir un arbre intermédiaire d'un sous-ensemble hybride suivant un deuxième mode de réalisation de l'invention.
[Fig. 3] La figure 3 est une vue en coupe du module motorisé suivant un troisième mode de réalisation de l'invention.
[Fig. 4] La figure 4 est une vue de détail en coupe d'un module motorisé suivant un quatrième mode de réalisation de l'invention.
[Fig. 5] La figure 5 illustre le comportement des différents organes du sous-ensemble hybride et du véhicule lors d'une phase transitoire de changement à un rapport de vitesse supérieur.
[Fig. 6] La figure 6 illustre le comportement des différents organes du sous-ensemble hybride et du véhicule lors d'une phase transitoire de changement à un rapport de vitesse inférieur.

Pour plus de clarté, les éléments identiques ou similaires sont repérés par des signes de référence identiques sur l'ensemble des figures.

### DESCRIPTION DÉTAILLÉE DE MODES DE REALISATION

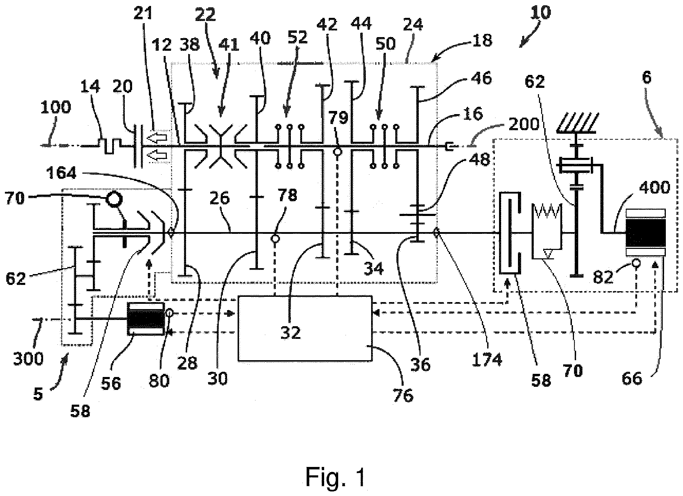

Sur la figure **1** est illustré un sous-ensemble hybride **10** d'entraînement d'un véhicule selon un premier mode de réalisation de l'invention, comportant un arbre primaire **12** destiné à être entraîné par un moteur principal **14** du véhicule, par exemple un moteur thermique, un arbre secondaire **16** destiné à entraîner un ensemble d'une ou plusieurs roues motrices du véhicule (non illustré), et une boîte de transmission **18.**

La liaison du moteur principal **14** à l'arbre primaire **12** peut inclure un embrayage **20** de tout type approprié, par exemple un embrayage à glissement. L'embrayage **20** est commandé par un actionneur d'embrayage **21** intégré à la boîte de transmission **18.** La liaison de l'arbre secondaire **16** aux roues du véhicule peut inclure un ou plusieurs ponts moteurs.

La boîte de transmission **18,** logée à l'intérieur d'une cavité **22** d'un carter de transmission **24,** comporte un arbre intermédiaire **26** auquel sont solidarisées en rotation des roues dentées intermédiaires **28, 30, 32, 34, 36.** Deux roues dentées primaires **38, 40** coaxiales avec l'arbre primaire **12,** forment chacune un train d'engrenages avec une roue dentée correspondante **28,** respectivement **30,** parmi les roues dentées intermédiaires. Les engrènements des trains d'engrenages **38, 28 et 40, 30** entre roues dentées primaires **38, 40** et les roues dentées intermédiaires correspondantes **28, 30** sont permanents. Un double synchroniseur **41** à trois positions permet d'accoupler l'une ou l'autre des roues dentées primaires **38, 40** à l'arbre primaire **12,** et offre une position neutre dans laquelle aucune des roues dentées primaires **38, 40** n'est accouplée à l'arbre primaire **12.**

Des roues dentées secondaires **42,44,46,** coaxiales avec l'arbre secondaire **16,** forment également chacune un train d'engrenages avec une roue dentée correspondante **32, 34, 36,** respectivement, parmi les roues dentées intermédiaires, l'un des trains d'engrenage étant inverseur et comportant une roue intermédiaire **48** pour réaliser un rapport de marche arrière. Les engrènements des trains d'engrenages formés par les roues dentées secondaires **42, 44, 46** et les roues dentées intermédiaires correspondantes **32, 34, 36** sont permanents. Un accouplement à crabot à trois positions sans synchroniseurs **50,** positionné entre deux des roues secondaires **44**, **46**, permet soit d'accoupler à l'arbre secondaire **16** l'une ou l'autre des deux roues secondaires associées **44**, **46**, soit, dans une position neutre intermédiaire, de maintenir les roues dentées secondaires associées **44**, **46** découplé de l'arbre secondaire **16.**

Dans ce mode de réalisation, l'axe de révolution **100** de l'arbre primaire **12** est aligné avec l'axe de révolution **200** avec l'arbre secondaire **16,** ce qui permet d'utiliser la roue dentée primaire d'extrémité **40** alternativement comme roue primaire, associée à l'arbre primaire **12** par le synchroniseur **41,** ou comme roue secondaire associée à l'arbre secondaire **16.** À cet effet, un accouplement à crabot **52** à trois positions sans synchroniseurs, positionné entre la roue primaire d'extrémité **40** et la roue secondaire **42,** permet d'accoupler à l'arbre secondaire **16** soit la roue primaire d'extrémité **40** soit la roue secondaire **42,** et permet également, dans une position neutre intermédiaire, de maintenir la roue primaire d'extrémité **40** et la roue secondaire **42** découplées de l'arbre secondaire **16.**

On établit ainsi une boîte de transmission **18** à six rapports de marche avant et potentiellement deux rapports de marche arrière, que l'on peut le cas échéant coupler en sortie d'arbre secondaire **16** à un train épicycloïdal (non illustré) afin d'obtenir une boîte de vitesse à douze rapports. Cependant, ce nombre de rapport n'est pas limité.

De façon remarquable, le sous-ensemble hybride d'entraînement **10** est équipé d'un module motorisé **5** comportant une première machine électrique réversible **56** d'entraînement et de ralentissement de l'arbre intermédiaire **26,** dont le rotor tourne autour d'un axe de révolution **300.** Le module motorisé **5** comporte également une interface de liaison **164** liée cinématiquement en rotation à l'arbre intermédiaire et un réducteur de vitesse **62** disposé cinématiquement entre la machine électrique réversible **56** et l'interface de liaison **164.** L'interface de liaison **164,** peut par exemple être constituée par un tronçon d'arbre cannelé ou un manchon cannelé inséré sur l'extrémité de l'arbre intermédiaire **26.**

Afin de protéger la machine électrique réversible **56** des acyclismes et vibrations en provenance de l'arbre intermédiaire **26,** le module motorisé **5** comprend un dispositif d'amortissement d'oscillations de torsion **70** disposé cinématiquement entre le réducteur de vitesse **62** et l'interface de liaison **164.** L'implantation du dispositif d'amortissement d'oscillations de torsion **70** entre le réducteur de vitesse **62** et l'interface de liaison **164** permet également de protéger les engrenages du réducteur de vitesse.

Lorsque la machine électrique réversible **56** est activée en mode d'entrainement, on évite la transmission de vibrations générées depuis la machine électrique réversible vers l'arbre intermédiaire. Ces vibrations peuvent être importantes lorsque la machine électrique réversible est de forte puissance.

Dans le module motorisé **5** représenté sur la figure **1****,** le dispositif d'amortissement d'oscillations de torsion **70** est du type amortisseur à masses pendulaires.

Le module motorisé 5 comporte également un mécanisme d'accouplement et de désaccouplement **58** de la première machine électrique réversible **56** à l'arbre intermédiaire **26,** ledit mécanisme d'accouplement **58** étant disposé cinématiquement entre le dispositif d'amortissement d'oscillations de torsion 70 et l'interface de liaison **164.**

Certains au moins des éléments du module motorisé **5** peuvent être logés dans un carter de module **155,** notamment le train d'engrenages réducteur **62, le** dispositif d'amortissement d'oscillations de torsion **70** le cas échéant le mécanisme d'accouplement et de désaccouplement **58.** La machine électrique réversible **56** peut être alternativement, comme illustré sur la figure **1****,** disposée à l'extérieur du carter de module **155,** le cas échéant fixée au carter de module **155.** Le module motorisé **5** peut ainsi être réalisé sous une forme de module unitaire apte à être intégré au sein du sous-ensemble hybride d'entraînement **10.**

À titre d'illustration, on peut prévoir une machine électrique réversible **56** alimentée en 48 volts, avec un rapport de réduction entre la sortie du rotor de la machine électrique et le mécanisme d'accouplement compris entre 4 et 6, suivant que l'on souhaite privilégier un couple élevé ou une vitesse de rotation élevée.

Dans ce premier mode de réalisation, le sous-ensemble hybride d'entraînement **10** peut en outre être équipé, de façon optionnelle, d'un deuxième module motorisé **6** comportant une deuxième machine électrique réversible **66** d'entraînement et de ralentissement de l'arbre intermédiaire **26,** dont le rotor tourne autour d'un axe de révolution **400,** et un autre mécanisme d'accouplement et de désaccouplement **58** de la deuxième machine électrique réversible **66** à l'arbre intermédiaire **26.**

Le module motorisé **6** comporte également une interface de liaison **174** liée cinématiquement en rotation à l'arbre intermédiaire **26** et un réducteur de vitesse **62** du type réducteur à train épicycloïdal disposé cinématiquement entre la machine électrique réversible **66** et l'interface de liaison **174.** L'interface de liaison **164,** peut par exemple être constituée par un tronçon d'arbre cannelé ou un manchon cannelé inséré sur l'extrémité de l'arbre intermédiaire **26.**

Afin de protéger la deuxième machine électrique réversible **66** des acyclismes et vibrations en provenance de l'arbre intermédiaire **26,** le module motorisé **6** comprend également un dispositif d'amortissement d'oscillations de torsion **70** disposé à la sortie du train épicycloïdal. Le dispositif d'amortissement d'oscillations de torsion **70** est lié cinématiquement à un organe de sortie de couple, plus particulièrement à l'arbre planétaire de sortie du train épicycloïdal **62.** L'implantation du dispositif d'amortissement d'oscillations de torsion **70** entre le réducteur de vitesse **62** et l'interface de liaison **174** permet de protéger les engrenages du train épicycloïdal.

Dans le module motorisé **6** représenté sur la figure **1****,** le dispositif d'amortissement d'oscillations de torsion **70** est du type amortisseur à ressorts hélicoïdaux **70a.**

La deuxième machine électrique réversible **66** est utilisée ici pour augmenter la puissance électrique disponible pour l'entraînement ou le ralentissement de l'arbre intermédiaire **26,** ce qui permet d'utiliser le cas échéant deux machines électriques **56 66** de petites dimensions ayant un encombrement radial moins important qu'une machine électrique unique de puissance équivalente.

Les modules motorisés **5, 6** sont disposés de préférence à l'extérieur de la cavité principale **22** du carter de boîte de transmission **24,** ce qui permet de proposer ce sous-ensemble comme équipement optionnel sur une boîte de transmission conventionnelle. Les axes de révolution **300, 400** des deux machines électriques **56, 66** peuvent le cas échéant être alignés, et sont de préférence parallèles aux axes de révolution **100, 200** de l'arbre primaire **12** et de l'arbre secondaire **16,** parallèles. L'axe de révolution **300** de la machine électrique **56** est à distance de l'axe de révolution de l'arbre intermédiaire.

Une unité de commande **76** permet de commander la première machine électrique réversible **56** et son mécanisme d'accouplement et de désaccouplement **58,** ainsi que, le cas échéant, la deuxième machine électrique réversible **66** et son autre mécanisme d'accouplement et de désaccouplement **58.** À cette unité de commande sont connectés des capteurs **78, 79, 80, 82** pour mesurer la vitesse de révolution de l'arbre intermédiaire **26** et pour mesurer une vitesse de révolution caractéristique de chacune des machines électriques réversibles **56**, **66**, qui peut être une vitesse de l'arbre de sortie de chaque machine réversible **56**, **66** ou une vitesse de révolution d'un élément du train réducteur associé **62.** Cette unité de commande **76** peut être intégrée à une commande robotisée de la boîte de transmission **18** qui commande l'ouverture et la fermeture des synchroniseurs **41,** des mécanismes à crabot **50, 52,** et le cas échéant de l'embrayage principal **20** par l'intermédiaire de l'actionneur d'embrayage **21,** pour répondre à une consigne de couple ou de vitesse.

La première machine électrique **56** et la deuxième machine électrique optionnelle **66** permettent d'envisager plusieurs modes de fonctionnement.

Une première utilisation vise les phases transitoires de changement de rapport de vitesse de la boîte de transmission **18.** Durant ces phases transitoires, l'une ou l'autre des deux machines électriques **56, 66,** ou les deux, permettent d'adapter la vitesse de révolution de l'arbre intermédiaire aux besoins de synchronisation lors des commutations des mécanismes à crabot **50, 52** ou des synchroniseurs **41,** la ou les machines électriques pouvant être utilisées alternativement comme moteur électrique pour augmenter la vitesse de révolution de l'arbre intermédiaire **26** ou comme frein électrodynamique pour diminuer cette vitesse. Cette adaptation de la vitesse de l'arbre intermédiaire **26** permet de réduire les temps de crabotage ou de synchronisation, sans avoir recours à un frein de boîte ou au double débrayage.

On va maintenant décrire, dans le cadre d'un sous-ensemble hybride **10** comprenant des mécanismes à crabot **50, 52** la phase transitoire de changement à un rapport de vitesse supérieur. Les mécanismes à crabot ou autrement appelés crabots **50**, **52** sont disposés entre les roues dentées secondaires **42**, **44** et l'arbre secondaire **16.** L'embrayage **20** de la boite de transmission **18** est commandé par un actionneur d'embrayage **21** robotisé afin d'accélérer les changements de rapport de vitesse. L'actionneur d'embrayage **21** est piloté par l'unité de commande **76.**

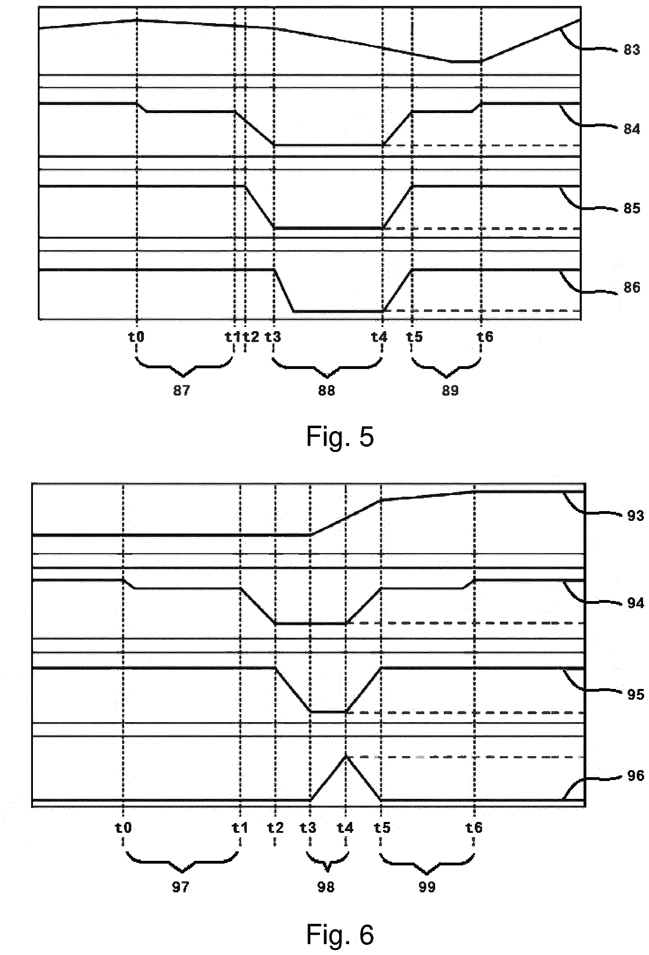

La figure **5** illustre le comportement des différents organes du sous-ensemble hybride et du véhicule pendant cette phase transitoire de changement à un rapport de vitesse supérieur. Sur cette figure, la courbe **83** illustre la vitesse de rotation du moteur thermique **14,** la courbe **84** illustre l'état ouvert ou fermé de l'embrayage **20,** la courbe **85** illustre la position neutre ou en prise de la boite de transmission **18,** la courbe **86** illustre l'état d'activation de la machine électrique réversible **56.**

Par ailleurs, sur cette figure **5****,** une première phase **87** illustre une phase de roulage du véhicule comprise entre l'instant t0 et t1 dans laquelle on amorce l'ouverture de l'embrayage **20,** l'ouverture complète étant achevée à l'instant t3. Entre t2 et t3, la boite de transmission **18** passe de la position en prise vers la position neutre en désengageant le crabot **50.** Pour préparer l'engagement du crabot **52,** on mesure la vitesse de rotation relative entre l'arbre secondaire **16** et la roue dentée secondaire associée **42** par utilisation des différents capteurs de vitesse **78**, **79.** Une seconde phase **88** illustre une phase de roulage du véhicule comprise entre t3 et t4 dans laquelle la machine électrique réversible **56, 66** est activée pour ralentir l'arbre intermédiaire **26** du sous-ensemble hybride. Dans cette phase **88,** la vitesse de rotation de l'arbre intermédiaire **26** est ralentie de manière à synchroniser les vitesses de rotation de la roue dentée secondaire **42** et de l'arbre secondaire **16.** Entre t4 et t5, le crabot **52** est engagé pour accoupler l'arbre secondaire **16** à la roue dentée secondaire associée **42** lorsque leurs vitesses de rotation sont synchronisées. Egalement, entre t4 et t5, on amorce la fermeture de l'embrayage **20.** Une troisième phase **89** illustre une phase de roulage du véhicule comprise entre t5 et t6 dans laquelle l'embrayage **20** se ferme jusqu'à l'achèvement du changement à un rapport de vitesse supérieur.

Grace à la ou les machines électriques réversibles **56, 66,** il est possible de réduire les temps de crabotage, sans avoir recours à un frein de boîte. L'arbre intermédiaire **26** est ralenti jusqu'à ce que la vitesse de rotation de la roue dentée secondaire **42** se synchronise avec la vitesse de rotation de l'arbre secondaire **16.**

On va maintenant décrire, dans le cadre d'un sous-ensemble hybride **10** selon l'invention, la phase transitoire de changement à un rapport de vitesse inférieur.

La figure **6** illustre le comportement des différents organes du sous-ensemble hybride et du véhicule pendant cette phase transitoire. Sur cette figure, la courbe **93** illustre la vitesse de rotation du moteur thermique **14,** la courbe **94** illustre l'état ouvert ou fermé de l'embrayage **20,** la courbe **95** illustre la position neutre ou en prise de la boite de transmission **18,** la courbe **96** illustre l'état d'activation de la machine électrique réversible **56, 66.**

Par ailleurs, sur cette figure **6****,** une première phase **97** illustre une phase de roulage du véhicule comprise entre l'instant t0 et t1 dans laquelle on amorce l'ouverture de l'embrayage **20,** l'ouverture complète étant achevée à l'instant t2. Entre t2 et t3, la boite de transmission **18** passe de la position en prise vers la position neutre en désengageant le crabot **52.** Pour préparer l'engagement du crabot **50,** on mesure la vitesse de rotation relative entre l'arbre secondaire **16** et la roue dentée secondaire associée **44** par utilisation des différents capteurs de vitesse **78**, **79.** Une seconde phase **98** illustre une phase de roulage du véhicule comprise entre t3 et t4 dans laquelle la machine électrique réversible **56** est activée pour entrainer et accélérer l'arbre intermédiaire **26** du sous-ensemble hybride de manière à synchroniser les vitesses de rotation de la roue dentée secondaire **44** et de l'arbre secondaire **16.** Entre t4 et t5, le crabot **50** est engagé pour accoupler l'arbre secondaire **16** à la roue dentée secondaire associée **44** lorsque les vitesses de rotation de la roue dentée secondaire et de l'arbre secondaire sont synchronisées. Egalement, entre t4 et t5, on amorce la fermeture de l'embrayage **20.** Une troisième phase **99** illustre une phase de roulage du véhicule comprise entre t5 et t6 dans laquelle l'embrayage **20** se ferme jusqu'à l'achèvement du changement à un rapport de vitesse inférieur.

Grace à la ou les machines électriques réversibles **56, 66,** il est possible de réduire les temps de crabotage, sans avoir recours au double débrayage. L'arbre intermédiaire **26** est entrainé et accéléré jusqu'à ce que la vitesse de rotation de la roue dentée secondaire **44** se synchronise avec la vitesse de rotation de l'arbre secondaire **16.**

Or des phases transitoires, lorsqu'un rapport de vitesse est engagé, la ou les machines électriques réversibles **56, 66** peuvent être utilisée en générateur de courant, pour recharger une batterie du véhicule, ou pour moduler le ralentissement de la chaîne cinématique de transmission lorsque le moteur thermique principal **14** du véhicule entre dans un régime de frein moteur. Toujours lorsqu'un rapport de vitesse est engagé, la ou les machines électriques **56, 66,** alimentées par une batterie du véhicule peut être utilisée en moteur pour un apport de puissance supplémentaire pour la traction du véhicule.

Une utilisation des machines électriques **56**, **66** pour une traction purement électrique du véhicule peut également être envisagée en ouvrant l'embrayage **20** ou les synchroniseurs **41** pour découpler le moteur principal **14** ou l'arbre primaire **12,** tout en conservant l'un des mécanismes à crabots **50, 52** engagé.

Les mécanismes d'accouplement et de désaccouplement **58** sont utilisés pour interrompre la liaison entre l'arbre intermédiaire **26** et les machines électriques **56, 66** lorsque ces dernières ne sont pas utiles, de manière à limiter le couple de traînée des machines électriques **56, 66** et à réduire la consommation de carburant.

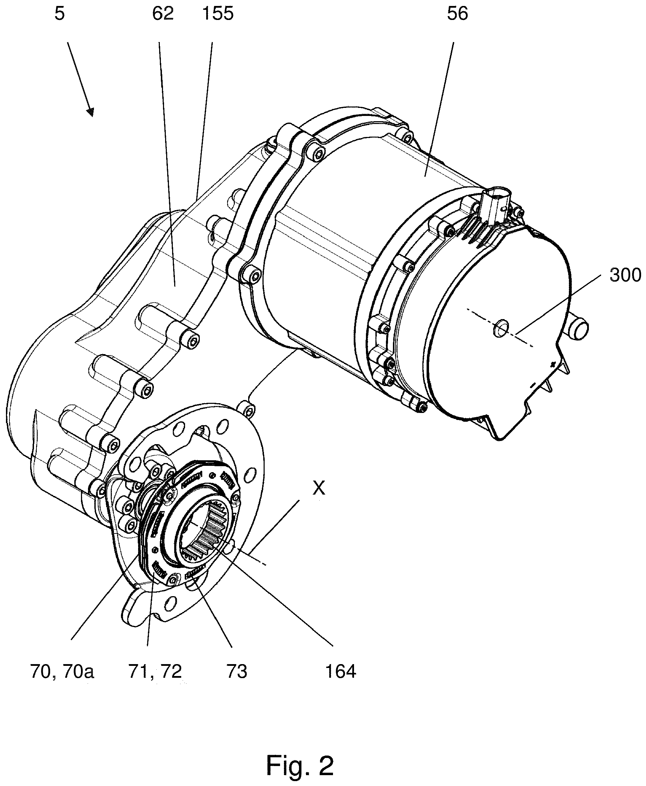

Sur la figure **2** est illustré un deuxième mode de réalisation de l'invention, dans lequel le module motorisé **5** comporte un carter de module **155** pour le logement du réducteur de vitesse **62** et du dispositif d'amortissement d'oscillations de torsion **70.** La machine électrique réversible **56** est ici fixée au carter de module **155.** La machine électrique réversible **56** a un axe de révolution parallèle à l'axe de révolution de l'interface de liaison **164** et distant de l'axe de révolution de l'interface de liaison **164.**

Le dispositif d'amortissement d'oscillations de torsion **70** du type amortisseur à ressorts hélicoïdaux **70a** comporte :
- un voile de transmission de couple **71** ;
- deux éléments de guidage **72** liés en rotation, coaxiaux suivant un axe de rotation **X** et disposés de part et d'autre dudit voile de transmission de couple **71** ;
- des ressorts hélicoïdaux de compression **73** en appui sur le voile de transmission de couple **71** et les éléments de guidage **72.**

Dans ce deuxième mode de réalisation, l'un des éléments de guidage **72** est lié en rotation avec la sortie du réducteur de vitesse 62 et le voile de transmission de couple **71** est raccordé directement sur l'arbre intermédiaire **26** par l'interface de liaison **164.** L'interface de liaison **164** est un moyeu cylindrique muni d'une cannelure intérieure.

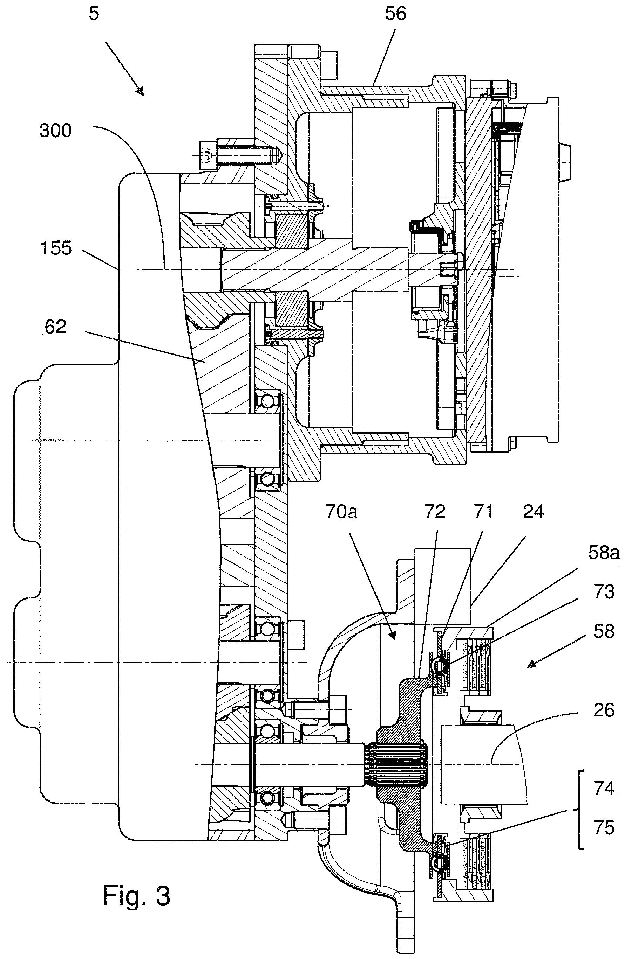

Sur la figure **3** est illustré un troisième mode de réalisation de l'invention, qui diffère du précédent par l'association du dispositif d'amortissement d'oscillations de torsion **70** du type amortisseur à ressorts hélicoïdaux et d'un mécanisme d'accouplement et de désaccouplement **58** du type mécanisme d'embrayage à friction. Le voile de transmission de couple **71** est lié en rotation avec le porte-disques d'entrée **58a** du mécanisme d'embrayage à friction **58.**

Afin d'améliorer les capacités de filtrage du module motorisé **5,** le dispositif d'amortissement d'oscillations de torsion **70** comprend un sous-ensemble d'hystérésis apte à générer un couple d'hystérésis pour amortir les oscillations de torsion. Le sous-ensemble d'hystérésis comporte une rondelle de frottement **74** et une rondelle élastique 75 d'application de charge sur la rondelle de frottement.

De par sa structure, le dispositif d'amortissement d'oscillations de torsion 70 du type amortisseur à ressorts hélicoïdaux **70a** comprend un premier sens d'actionnement angulaire direct correspondant à une activation de la machine électrique réversible en mode d'entrainement dans lequel les ressorts hélicoïdaux de compression **73** sont comprimés. Le dispositif d'amortissement d'oscillations de torsion **70** comprend un deuxième sens d'actionnement angulaire rétrograde correspondant à une activation de la machine électrique réversible en mode de ralentissement dans lequel les ressorts hélicoïdaux de compression **73** sont également comprimés. Les débattements angulaires en sens direct ou rétrograde peuvent être compris entre 2 et 20 degrés. Les débattements angulaires en sens direct ou rétrograde peuvent être différents.

Lorsque la machine électrique réversible **56** est en mode d'entrainement et le moteur thermique en mode propulsion, il peut être avantageux d'avoir le couple d'hystérésis du dispositif d'amortissement d'oscillations de torsion du type amortisseur à ressorts hélicoïdaux dans le sens d'actionnement angulaire direct supérieur au couple d'hystérésis dans le sens d'actionnement angulaire rétrograde.

Lorsque la machine électrique réversible **56** est en mode générateur électrique de courant et le moteur thermique en mode propulsion, il peut être avantageux d'avoir le couple d'hystérésis du dispositif d'amortissement d'oscillations de torsion du type amortisseur à ressorts hélicoïdaux dans le sens d'actionnement angulaire direct inférieur au couple d'hystérésis dans le sens d'actionnement angulaire rétrograde.

Les acyclismes provenant du moteur thermique ont besoin d'être réduits par un couple d'hystérésis élevé au sein du dispositif d'amortissement d'oscillations de torsion. La valeur du couple d'hystérésis est notamment fonction de la puissance de la machine électrique réversible.

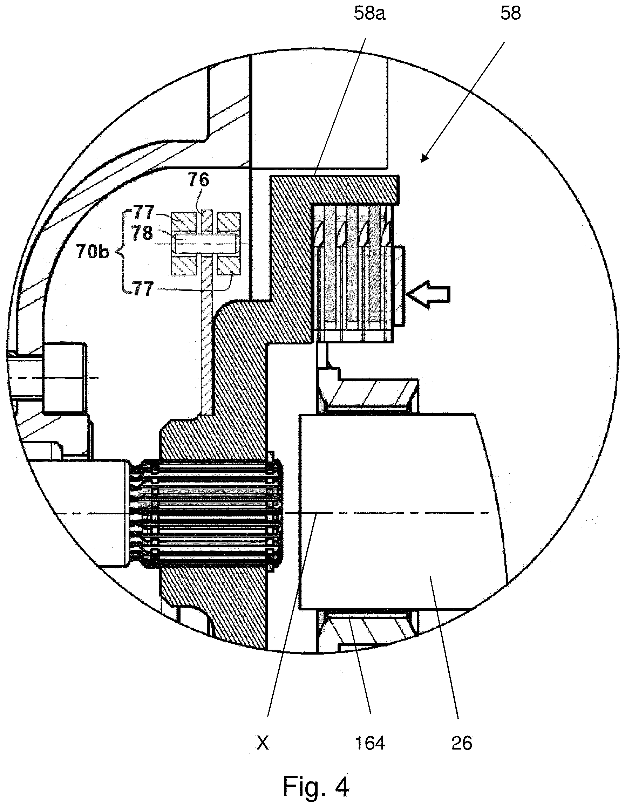

Sur la figure **4** est illustré un quatrième mode de réalisation de l'invention, qui diffère du troisième mode de réalisation par l'utilisation d'un dispositif d'amortissement d'oscillations de torsion du type amortisseur à masses pendulaires **70b.** Cet amortisseur à masses pendulaires **70b** comporte un support mobile **76** en rotation autour d'un axe **X** et deux masses pendulaires **77** dont le déplacement par rapport au support est guidé par des organes de roulement **78.** Une pluralité de masses pendulaires **77** sont réparties angulairement autour de l'axe X et oscillent autour du support mobile **76** selon les acyclismes en provenance de l'arbre intermédiaire **26.**

En réaction aux irrégularités ou acyclismes de rotation, chaque masse pendulaire **77** se déplace de manière à ce que son centre de gravité oscille de façon pendulaire. La fréquence d'oscillation de chaque masse est proportionnelle à la vitesse de rotation de l'arbre intermédiaire **26.**

La structure de cet amortisseur à masses pendulaires **70b** est remarquable en ce que le support mobile **76** est lié en rotation avec l'organe de sortie de couple du réducteur de vitesse. Dans cet exemple, le support mobile **76** est fixé par emmanchement sur le porte-disques d'entrée **58a** du mécanisme d'embrayage à friction **58.**

La description qui a été ici faite de la boîte de transmission **18** est illustrative et n'a pas vocation à limiter la portée de l'enseignement de la présente demande, qui peut s'appliquer à d'autres configurations, avec un nombre plus ou moins grand de rapport, avec des accouplements à crabot ou à synchroniseurs. La boite de transmission peut comprendre par exemple un deuxième arbre intermédiaire.

## Revendications

1. Module motorisé (5, 6) pour entraîner et ralentir un arbre intermédiaire d'un sous-ensemble hybride comportant au moins une roue dentée primaire (38, 40) destinée à être entraînée par un moteur principal (14) du véhicule, un arbre secondaire (16) destiné à entraîner un ensemble d'une ou plusieurs roues motrices du véhicule, plusieurs roues dentées secondaires (42, 44, 46) aptes être accouplées à l'arbre secondaire (16), et des roues dentées intermédiaires (28, 30, 32, 34, 36) solidarisées en rotation à l'arbre intermédiaire (26), la ou les roues dentées primaires (38, 40) et les roues dentées secondaires (42, 44, 46) engrenant chacune de façon permanente avec une roue dentée correspondante parmi les roues dentées intermédiaires (28, 30, 32, 34, 36), le module motorisé comportant au moins une machine électrique réversible (56) apte à entraîner et ralentir l'arbre intermédiaire (26), une interface de liaison (164, 174) apte à être liée cinématiquement en rotation à l'arbre intermédiaire (26), un réducteur de vitesse (62) disposé cinématiquement entre la machine électrique réversible (56, 66) et l'interface de liaison (164, 174) **caractérisé en ce que** le module motorisé (5, 6) comprend un dispositif d'amortissement d'oscillations de torsion (70) disposé cinématiquement entre le réducteur de vitesse (62) et l'interface de liaison (164, 174).

2. Module motorisé (5, 6) selon la revendication précédente, **caractérisé en ce que** le réducteur de vitesse (62) comprend un organe d'entrée de couple lié en rotation avec le rotor de la machine électrique réversible et un organe de sortie de couple lié en rotation avec le dispositif d'amortissement d'oscillations de torsion (70), ledit réducteur de vitesse (62) étant du type réducteur à train épicycloïdal ou du type réducteur à arbres parallèles ou du type réducteur à courroie.

3. Module motorisé (5, 6) selon la revendication 1 ou 2, **caractérisé en ce que** le dispositif d'amortissement d'oscillations de torsion (70) est du type amortisseur à ressorts hélicoïdaux (70a) ou du type amortisseur à masses pendulaires (70b).

4. Module motorisé (5, 6) selon la revendication 3, **caractérisé en ce que** le dispositif d'amortissement d'oscillations de torsion (70) du type amortisseur à ressorts hélicoïdaux (70a) comporte :
- un voile de transmission de couple (71) ;
- deux éléments de guidage (72) liés en rotation, coaxiaux suivant un axe de rotation (X) et disposés de part et d'autre dudit voile de transmission de couple (20) ;
- des ressorts hélicoïdaux de compression (73) en appui sur le voile de transmission de couple et les éléments de guidage ;
le voile de transmission de couple (71) ou l'un des éléments de guidage (72) étant lié en rotation avec la sortie du réducteur de vitesse (62).

5. Module motorisé (5, 6) selon la revendication précédente, **caractérisé en ce que** le dispositif d'amortissement d'oscillations de torsion (70) du type amortisseur à ressorts hélicoïdaux (70a) comprend un sous-ensemble d'hystérésis apte à générer un couple d'hystérésis pour amortir les oscillations de torsion comportant au moins une rondelle de frottement (74) et au moins une rondelle élastique (75) d'application de charge sur l'au moins une rondelle de frottement.

6. Module motorisé (5, 6) selon la revendication précédente, **caractérisé en ce que** le dispositif d'amortissement d'oscillations de torsion (70) du type amortisseur à ressorts hélicoïdaux (70a) comprend un sens d'actionnement angulaire direct correspondant à une activation de la machine électrique réversible en mode d'entrainement et un sens d'actionnement angulaire rétrograde correspondant à une activation de la machine électrique réversible en mode de ralentissement.

7. Module motorisé (5, 6) selon la revendication précédente, **caractérisé en ce que** le couple d'hystérésis du dispositif d'amortissement d'oscillations de torsion (70) du type amortisseur à ressorts hélicoïdaux (70a) dans le sens d'actionnement angulaire direct est supérieur ou égal ou inférieur au couple d'hystérésis dans le sens d'actionnement angulaire rétrograde.

8. Module motorisé (5, 6) selon la revendication 3, **caractérisé en ce que** le dispositif d'amortissement d'oscillations de torsion (70) du type amortisseur à masses pendulaires (70b), comporte un support (76) mobile en rotation autour d'un axe (X) et au moins une masse pendulaire (77) dont le déplacement par rapport au support est guidé par au moins un organe de roulement (78), ledit support (76) étant lié en rotation avec l'organe de sortie de couple du réducteur de vitesse (62).

9. Module motorisé (5, 6) selon l'une des revendications précédentes, **caractérisé en ce qu'**il comporte un mécanisme d'accouplement (58) apte à accoupler le module motorisé à l'arbre intermédiaire (26), ledit mécanisme d'accouplement (58) étant disposé cinématiquement entre le dispositif d'amortissement d'oscillations de torsion (70) et l'interface de liaison (164).

10. Module motorisé (5, 6) selon la revendication précédente, **caractérisé en ce que** le mécanisme d'accouplement (58) est du type mécanisme à crabot ou du type un mécanisme à synchroniseur ou du type mécanisme d'embrayage à friction.

11. Module motorisé (5, 6) selon l'une des revendications précédentes, **caractérisé en ce qu'**il comporte un carter de module (155) pour le logement du réducteur de vitesse (62) et du dispositif d'amortissement d'oscillations de torsion (70), la machine électrique réversible (56) étant soit logée dans le carter, soit fixée au carter.

12. Sous-ensemble hybride (10) d'entraînement d'un véhicule, comportant :
- Au moins une roue dentée primaire (38, 40) destinée à être entraînée par un moteur principal (14) du véhicule,
- un arbre secondaire (16) destiné à entraîner un ensemble d'une ou plusieurs roues motrices du véhicule,
- plusieurs roues dentées secondaires (42, 44, 46) aptes être accouplées à l'arbre secondaire (16),
- un arbre intermédiaire (26) auquel sont solidarisées en rotation des roues dentées intermédiaires (28, 30, 32, 34, 36), la ou les roues dentées primaires (38, 40) et les roues dentées secondaires (42, 44, 46) engrenant chacune de façon permanente avec une roue dentée correspondante parmi les roues dentées intermédiaires (28, 30, 32, 34, 36), et
**caractérisé en ce qu'**il comporte en outre au moins un module motorisé (5, 6) selon l'une quelconque des revendications précédentes, l'interface de liaison (164) du module motorisé (5) étant solidaire en rotation de l'arbre intermédiaire (26).

13. Sous-ensemble hybride (10) selon la revendication précédente, **caractérisé en ce que** la machine électrique réversible (56) a un axe de rotation parallèle à un axe de rotation de l'arbre intermédiaire (26), une ou plusieurs des caractéristiques suivantes étant réalisées :
- l'axe de rotation de la machine électrique réversible (56) est distant de l'axe de rotation de l'arbre intermédiaire (26) ;
- l'axe de rotation de la machine électrique réversible (56) est distant d'un axe de rotation des roues dentées primaires (38, 40) ;
- l'axe de rotation de la machine électrique réversible (56) est distant d'un axe de rotation de l'arbre secondaire (16).

14. Sous-ensemble hybride (10) selon l'une quelconque des revendications 12 à 13 **caractérisé en ce qu'**il comporte au moins un crabot (50, 52) positionné cinématiquement entre une des roues dentées secondaires (42, 44, 46) et l'arbre secondaire (16) et apte à accoupler l'arbre secondaire (16) à la roue secondaire dentée associée (42, 44, 46), ledit crabot (50, 52) étant engagé lorsque les vitesses de rotation de la roue dentée secondaire et de l'arbre secondaire sont synchronisées par entrainement ou ralentissement de l'arbre intermédiaire (26) grâce à l'activation de la machine électrique réversible (56).

15. Méthode d'engagement d'un crabot (50, 52) apte à accoupler un arbre secondaire (16) à une roue dentée secondaire (42, 44, 46) associée au sein d'un sous-ensemble hybride (10) selon la revendication 14, comprenant les étapes suivantes :
- Désaccouplement des roues dentées primaires (38, 40) par rapport au moteur principal (14) du véhicule ;
- Mise en position neutre du sous-ensemble hybride (10) par désengagement du rapport de vitesse ;
- Mesure de la vitesse de rotation relative entre l'arbre secondaire (16) et la roue dentée secondaire (42, 44, 46) associée ;
- Entrainement ou ralentissement de l'arbre intermédiaire par activation de la machine électrique réversible (56) pour synchroniser les vitesses de rotation de l'arbre secondaire (16) avec la roue dentée secondaire (42, 44, 46) associée ;
- Engagement du crabot (50, 52) pour accoupler l'arbre secondaire (16) à la roue dentée secondaire associée lorsque les vitesses de rotation de la roue dentée secondaire et de l'arbre secondaire sont synchronisées.
